# EUROPEAN PATENT SPECIFICATION

(11) **EP 1 662 878 B1**
(45) Date of publication and mention of the grant of the patent: **11.11.2009**
(21) Application number: 04766805.8
(22) Date of filing: 16.09.2004
(51) Int. Cl.: A01N 59/00

(54) **AQUEOUS PARASITICIDAL SUSPENSION**
WÄSSRIGE PARASITIZIDE SUSPENSION
SUSPENSION ANTIPARASITAIRE AQUEUSE

(30) Priority: 16.09.2003 FR 0310886
(43) Date of publication of application: 07.06.2006
(73) Proprietor: SOLVAY (Société Anonyme), 1050 Bruxelles (BE)
(72) Inventor: PALANGIE, Nicolas, F-60880 Le Meux (FR); PASCAL, Jean-Philippe, F-54000 Nancy (FR)
(74) Representative: Gilliard, Pierre
(86) International application number: PCT/EP2004/052197
(87) International publication number: WO 2005/025317

(56) References cited:
- WO-A-01/35744
- WO-A-02/102158
- DATABASE WPI Section Ch, Week 198227 Derwent Publications Ltd., London, GB; Class M11, AN 1982-56040E XP002284737 & JP 57 085990 A (KAWASAKI STEEL CORP) 28 May 1982 (1982-05-28)
- DATABASE CHEMABS [Online] CHEMICAL ABSTRACTS SERVICE, COLUMBUS, OHIO, US; 1990, DEPASQUALE, DAVID A. ET AL DEPASQUALE, DAVID A. ET AL: "Ammonium bicarbonate inhibition of mycotoxigenic fungi and spoilage yeasts Ammonium bicarbonate inhibition of mycotoxigenic fungi and spoilage yeasts" XP002284736 retrieved from STN Database accession no. 1990:529225 & JOURNAL OF FOOD PROTECTION , 53(4), 324-8 CODEN: JFPRDR; ISSN: 0362-028X JOURNAL OF FOOD PROTECTION , 53(4), 324-8 CODEN: JFPRDR; ISSN: 0362-028X, 1990,

## Description

The invention relates to an aqueous parasiticidal suspension. It also relates to the use of such a suspension, and to a method of deparasiting. The expression aqueous parasiticidal suspension is understood to mean an aqueous suspension in contact with which parasites (anthropods such as fleas, ticks and other acarids), which tend to develop in particular on farm animals, cannot survive, in particular after evaporation of the suspension.

The parasites may be at the egg, larva or adult stage. The action of the suspension may be direct. It may also be indirect, for example when the suspension destroys a substance necessary for the survival of the parasite.

The development of parasites on farm animals is a well known worrying problem. This development can have great consequences on the economic productivity of animal breeding farms. The absence of an effective solution at a reasonable cost sometimes encourages breeders to have recourse to unauthorized remedies.

It is known in particular to combat parasites using neurotoxic substances and growth inhibitors such as synthetic pyrethroids, organophosphates or carbamates, for example. These substances have the disadvantage of also being toxic for the animal on which the parasites develop. When the animal is bred for human food consumption, the use of neurotoxic parasiticides is banned because these substances contaminate the food chain, as shown by the European directives on biocides (98/8 EC) and on the protection of plants (91/414 EEC). They also have risks for the breeders.

In the document WO 01/35744, a parasiticidal composition based on silica is disclosed. This composition in gel form is free of neurotoxic agents but has a higher cost. Furthermore, the low proportion, in the compositon, of active substance requires the application of large quantities in order to obtain sufficient efficacy. Its use in large breeding farms is therefore difficult for economic reasons. Finally, this known composition has the disadvantage of forming on the treated surface a gelatinous deposit on which ambient dust tends to adhere, which reduces its efficacy over time.

WO 02/102158 discloses the use of an acaricide powder comprising more than 40 wt.% of sodium bicarbonate.

The invention aims to provide a parasiticidal composition harmless for humans, which has lasting efficacy in controlling parasites which develop on farm animals and which can be used at a low cost.

Consequently, the invention relates to an aqueous parasiticidal suspension comprising at least 20% by weight of sodium bicarbonate.

The aqueous suspension according to the invention comprises at least 20%, preferably 30%, by weight of sodium bicarbonate. This quantity is considerably higher than the maximum solubility of bicarbonate in water at room temperature. As a result, the aqueous suspension, which should therefore not be confused with an aqueous solution, comprises undissolved excess bicarbonate in the form of particles dispersed in a continuous aqueous phase. It is recommended that the suspension comprises at least 30% by weight of water in which the particles of undissolved sodium bicarbonate have a particle size distribution such that at least 50% of the particles have a diameter of less than 150 µm.

In an advantageous embodiment of the invention, the undissolved sodium bicarbonate particles present in the suspension have a particle size distribution such that at least 50%, preferably 75%, most preferably 90%, of the particles have a diameter of less than 150 µ, preferably less than 100 µ, most preferably less than 65 µ. The mean diameter is advantageously less than 100 µ, preferably 50 µ, most preferably 30 µ. The diameters are measured according to the ASTM C-690 - 1992 standard. The aqueous suspension can be easily obtained by mixing with water, vigorously and very homogeneously, a bicarbonate powder having a suitable particle size, taking into account the fact that at the time of mixing, the fine particles are preferably dissolved. It is recommended to use the suspension rapidly after its manufacture, for example within a period of less than 2 hours, in order to avoid sedimentation and possible agglutination of the undissolved particles.

Without wishing to be bound by a theoretical explanation, the inventors consider that this simultaneous presence, in the suspension according to the invention, of dissolved sodium bicarbonate and of undissolved crystals is responsible, after evaporation of the suspension on the treated support, for its excellent adherence and its efficacy, the bicarbonate dissolved and then crystallized after evaporation forming a sort of cement between the undissolved bicarbonate particles. After evaporation, the deposit comprising bicarbonate formed on the support is in the solid state. The ambient dusts consequently do not tend to adhere thereto, which maintains the efficacy of the composition for a long period. It also appears that the parasites do not eat the bicarbonate. It has been observed that when the parasite is in contact with the deposit formed after evaporation of the suspension, particles of undissolved bicarbonate bound by the cement formed by crystallization of the dissolved bicarbonate may become detached from the deposit when the parasite moves on it and adhere to the parasite, which hampers its movements and appears to cause its death. This hypothesis might explain the importance of the particle size of the undissolved bicarbonate since particles having a diameter close to the size of the parasite hamper its movements less.

It is preferable that the suspension does not comprise more than 45% by weight of sodium bicarbonate, it being possible for larger quantities to give rise to difficulties in applying to the treated support.

According to an advantageous embodiment of the invention, the aqueous suspension comprises at least 1%, preferably 5% of silica. It is recommended that it does not comprise more than 15%, preferably 10% thereof. It is observed that the presence of silica in the aqueous suspension increases through synergy the parasiticidal effects of sodium bicarbonate. Furthermore, the aqueous suspension comprising high bicarbonate concentrations, the presence of silica improves the flow of the suspension and therefore promotes its homogeneous application. It is recommended that the silica is in amorphous (and noncrystalline) form for its tolerance by the human body. After evaporation, the deposit comprising bicarbonate and silica being in the solid state, the bicarbonate forms a sort of cement for the silica particles also. The silica particles therefore do not have a tendency to become spontaneously detached from the treated support or to form dust.

It is preferable that the silica is in the form of very fine particles, having a high specific surface area, for example greater than 200 m²/g, preferably 400 m²/g, measured according to the ISO 5794-1 standard, annex D. According to an advantageous embodiment of the invention, the silica is in the form of particles having a mean diameter of less than 10 µ, preferably less than 8 µ, most preferably less than 6 µ. The mean diameter is measured according to the ASTM C-690 -1992 standard.

Sodium bicarbonate and silica are substances which are harmless for humans and animals. They are even authorized by different organizations (such as the Food and Drug Administration in the United States and the EEC) in human foodstuffs. The aqueous parasiticidal suspension according to the invention does not require any other substance which is active against the parasites, such as neurotoxic parasiticides.

According to a preferred variant of the invention, the aqueous parasiticidal suspension is free of another parasiticidal active ingredient.

The aqueous suspension according to the invention is effective against parasites in numerous environments, including the human environment. The expression human environment is understood to mean all the surfaces on which the parasites may be caused to settle, move or develop. This environment includes for example the walls and door or window frames of dwelling places, offices and breeding premises, the latter comprising cages, laying places, litter and nests. By virtue of its remarkable adherence to the floors and walls of buildings, it has been found to be particularly effective in combating the parasites which develop on farm animals.

Consequently, the invention also relates to a method for controlling the development of parasites on animals raised in buildings, according to which the environment of the animal in the building is brought into contact with an aqueous parasiticidal suspension according to the invention.

The bringing into contact may be obtained by any appropriate known means such as sprinkling, spraying or brushing. The quantity of suspension to be applied depends on the precise composition of the suspension, the nature of the parasite and the environment to be treated. It is recommended in general to apply quantities of suspension corresponding to the application of at least 10, preferably 15 g/m² of sodium bicarbonate. The application should be as homogeneous as possible.

The aqueous suspension being harmless for animals, it has the great advantage of being capable of being applied to the environment of the animal in the building premises in the presence of the animal. It is also not dangerous for the breeders, which simplifies the protections necessary during use.

Moreover, the method according to the invention may be used before or after contamination of the building with the parasites. If the building is already contaminated, the method makes it possible to kill a large quantity of parasites. The effect is then curative. If the building is not yet contaminated or has been cleaned, it has been observed that the method according to the invention makes it possible to surprisingly delay the development of the parasites when it is again occupied by the animals. This latter use of the method, on a building which has been cleaned, is recommended. The effect can then be described as preventive.

The parasites which develop on farm animals are extremely varied: there are in particular fleas, lice, bugs and ticks. Some are in particular classified in the insect family (fleas, lice), others in the acarid family (ticks, sarcoptids).

According to an advantageous variant of the method according to the invention, the parasites are acarids. The method is especially effective against *Dermanyssus gallinae*. These parasites have a tendency to develop abundantly in the environment of laying hens. They are intermittent parasites. They do not always remain in contact with the animal. They are killed during their contact with the treated environment of the animal.

The method according to the invention can be used in combating the parasites which develop on any type of farm animal. There may be mentioned, by way of example, bovine animals, ovine animals, caprine animals, rabbits, poultry, birds and pigs. The deparasiting of their environment improves the growth and the development of these animals and increases the productivity of the breeding farms.

According to a recommended embodiment of the method according to the invention, the farm animals are poultry such as laying hens and broilers. It has been observed that the treatment according to the invention of their environment increases the production of eggs by the laying hens and the growth of the chickens, by virtue of the elimination of the parasites.

The method is particularly advantageous for the breeding of broilers. Indeed, unlike the method using a powder, the method according to the invention allows good adherence of the treatment to litter, consisting of ground straw and wood shavings. The treatment also does not adversely affect the performance of the litter.

The buildings for breeding animals also suffer from the presence of numerous various moulds and fungi, such as for example *Aspergillus*, in particular *fumigatus*. The presence of bicarbonate in the parasiticidal composition according to the invention makes it possible to also combat their development

Consequently, the invention also relates to the use of an aqueous suspension comprising from 5 to 10% by weight of silica and from 30 to 45% of sodium bicarbonate for its combined parasiticidal and antifungal effects. The combination of a remarkable adherence onto the floors and walls of buildings, synergistic parasiticidal effects between the silica and the bicarbonate and finally antifungal effects of the latter makes the use according to the invention extremely advantageous in the treatment of buildings for breeding animals.

The following examples serve to illustrate the invention.

### Example 1 (in accordance with the invention)

There are taken 20 kg of a powder containing 85% by weight of sodium bicarbonate having a mean particle size of 40 µ and such that 75% of particles have a diameter of less than 65 µ and 15% of amorphous silica Sipernat^{®} 50S, manufactured by the company Degussa. The powder was mixed for 5 minutes in a Lödige-type ploughshare^{®} mixer by introducing the silica progressively. It was then added to and mixed with 25 litres of water, by means of a stirrer, so as to form an aqueous suspension. The suspension was applied by spraying, by means of a piston pump, at a pressure up to 150 bar, at a flow rate of one litre per minute approximately, to the environment of laying hens, in breeding premises capable of containing 10 000 hens on the floor. The quantity of suspension applied corresponds approximately to 20 g of sodium bicarbonate per square metre of treated surface. The building had been dismantled, cleaned and disinfected beforehand and was emptied of hens at the time of the treatment, which is described as preventive. In particular, the hatcheries and gratings were treated. Two weeks after the treatment, the hens were reintroduced into the building. 12 weeks after their reintroduction, no infestation of the building with the red lice Dermanyssus gallinae was detected.

By comparison, in the absence of treatment but after a similar dismantling, cleaning and disinfection, the infestation appears after 4 weeks.

### Example 2 (in accordance with the invention)

An aqueous parasiticidal suspension was prepared and applied as in the preceding example. It was applied at the rate of 20 g/m² of bicarbonate to the environment of laying hens in breeding premises in the form of a cage (also 10 000 hens). At the time of treatment, the building, which was still occupied by the hens, showed a very high level of infestation. The homogeneous presence of red lice Dermanyssus gallinae in the environment of the hens was responsible for red spots on the eggs produced, the result of the crushing of red lice full of blood during the fall of the egg after it has been laid. 12 hours after the treatment, the infestation had disappeared. 12 weeks after the treatment, it had still not reappeared. The laying hens, which were present during the application of the suspension, showed no discomfort.

### Example 3 (in accordance with the invention)

In this example, acarids (Dermanyssus Gallinae) coming from a lab stock have been used. Temperature has been controlled at 22°C and relative humidity maintained at 70 % +/- 5% by the presence of a saturated ammonium sulfate solution ((NH₄)₂SO4). The acarids were maintained in the dark.

Aqueous parasiticidal suspensions with different bicarbonates and silicas were prepared and applied as in the example 1. The bicarbonate 0-4 is such that 90% of the particles have a diameter less than 64µ and bicarbonate 0-10 such that 90% of the particles have a diameter less than 100µ. Sipernat 22 S is another amorphous silica produced by Degussa, having a lower specific surface of 190m²/g instead of 450 m²/g for Sipernat 50S. Tixosil 38AB is a silica produced by Rhodia having a larger mean diameter of 15µ (instead of 7µ for Sipernat 50S and 22S). The suspension was applied at the rate of 20g/m² of bicarbonate on a galvanized metal sheet.

The sprayings were effected within 1 hour of the preparation of the suspension.

The treated sheets were dried at open air for 24hours.

Approximately 700 acarids were each time put on the treated galvanized sheet in the presence of hens droppings.

The acarids death rate was measured after 1h, 2h, 3h, 4h, 5h, 6h, and 24h.

A control batch has been put on a non treated sheet, to measure the natural death rate of the acarids.

Each trial has been repeated thrice and mean values computed. The results are given in table 1.

**Table 1**

| | | | | | | | |
|---|---|---|---|---|---|---|---|
| **(in % death rate - mean values)** | | | | | | | |

| | Exposure time | | | | | | |
|---|---|---|---|---|---|---|---|
| | 1h | 2h | 3h | 4h | 5h | 6h | 24h |
| 85% BICAR 0/4 + 15% Sipernat 50 S | 5% | 43% | 100% | 100% | 100% | 100% | 100% |
| 85% BICAR 0/4 + 15% Sipernat 22 S | 2% | 37% | 100% | 100% | 100% | 100% | 100% |
| 85% BICAR 0/10 + 15% Sipernat 50 S | 0% | 26% | 72% | 100% | 100% | 100% | 100% |
| 85% BICAR 0/4 + 15% Rhodia Tixosil 38AB | 0% | 0% | 5% | 13% | 48% | 100% | 100% |
| Control | 0% | 0% | 0% | 0% | 0% | 0% | 3% |

## Claims

1. - Aqueous parasiticidal suspension comprising at least 20 % by weight of sodium bicarbonate, in which the particles of undissolved sodium bicarbonate have a particle size distribution such that at least 50 % of the particles have a diameter of less than 150 µ.

2. - Aqueous parasiticidal suspension according to the preceding claim, in which the particles of undissolved sodium bicarbonate have a particle size distribution such that at least 75 % of the particles have a diameter of less than 100 µ.

3. - Aqueous parasiticidal suspension according to any one of the preceding claims, comprising from 1 to 15 % by weight of the silica and from 30 to 45 % of sodium bicarbonate.

4. - Aqueous suspension according to the preceding claim, comprising from 5 to 10 % of silica.

5. - Aqueous suspension according to any one of claims 3 to 4, in which the silica is in the form of particles having a mean diameter of less 10 µm.

6. - Aqueous suspension according to any one of the preceding claims, free of another parasiticidal active ingredient.

7. - Method for controlling the development of parasites on animals raised in buildings, according to which the environment of the animal in the building is brought into contact with an aqueous suspension in accordance with any one of claims 1 to 6.

8. - Method according to the preceding claim, in which the parasites are acarids.

9. - Method according to either of claims 7 and 8, in which the animals are laying hens.

10. - Use of an aqueous suspension comprising from 1 to 15 % by weight of silica and from 30 to 45 % of sodium bicarbonate for its combined parasiticidal and antifungal effects.

## Patentansprüche

1. Wäßrige parasitizide Suspension, umfassend mindestens 20 Gew.-% Natriumbikarbonat, wobei die ungelösten Natriumbikarbonatteilchen solch eine Teilchengrößenverteilung aufweisen, daß mindestens 50% der Teilchen einen Durchmesser von weniger als 150 µ aufweisen.

2. Wäßrige parasitizide Suspension nach dem vorhergehenden Anspruch, wobei die ungelösten Natriumbikarbonatteilchen solch eine Teilchengrößenverteilung aufweisen, daß mindestens 75% der Teilchen einen Durchmesser von weniger als 100 µ aufweisen.

3. Wäßrige parasitizide Suspension nach einem der vorhergehenden Ansprüche, die 1 bis 15 Gew.-% Siliziumdioxid und 30 bis 45% Natriumbikarbonat umfaßt.

4. Wäßrige Suspension nach dem vorhergehenden Anspruch, die 5 bis 10% Siliziumdioxid umfaßt.

5. Wäßrige Suspension nach einem der Ansprüche 3 bis 4, wobei das Siliziumdioxid in Form von Teilchen mit einem durchschnittlichen Durchmesser von weniger als 10 µm vorliegt.

6. Wäßrige Suspension nach einem der vorhergehenden Ansprüche, die frei von anderen parasitiziden Wirkstoffen ist.

7. Verfahren fiir die Bekämpfung der Entwicklung von Parasiten an eingestallten Tieren, bei dem die Umgebung des Tiers in dem Stall mit einer wäßrigen Suspension gemäß einem der Ansprüche 1 bis 6 in Kontakt gebracht wird.

8. Verfahren nach dem vorhergehenden Anspruch, wobei es sich bei den Parasiten um Acariden handelt.

9. Verfahren nach einem der Ansprüche 7 und 8, wobei es sich bei den Tieren um Legehennen handelt.

10. Verwendung einer wäßrigen Suspension, die 1 bis 15 Gew.-% Siliziumdioxid und 30 bis 45% Natriumbikarbonat umfaßt, aufgrund ihrer parasitiziden und antifungalen Kombinationswirkungen.

## Revendications

1. - Suspension aqueuse parasiticide comprenant au moins 20% en poids de bicarbonate de sodium, dans laquelle les particules de bicarbonate de sodium non dissous ont une distribution granulométrique telle que au moins 50% des particules ont un diamètre inférieur à 150µ.

2. - Suspension aqueuse parasiticide selon la revendication précédente dans laquelle les particules de bicarbonate de sodium non dissous ont une distribution granulométrique telle que au moins 75 % des particules ont un diamètre inférieur à 100µ.

3. - Suspension aqueuse parasiticide selon l'une quelconque des revendications précédentes, comprenant de 1 à 15% en poids de silice et de 30 à 45% de bicarbonate de sodium.

4. - Suspension aqueuse selon la revendication précédente comprenant de 5 à 10% de silice.

5. - Suspension aqueuse selon l'une quelconque des revendications 3 à 4 dans laquelle la silice est à l'état de particules ayant un diamètre moyen inférieur à 10µm.

6. - Suspension aqueuse selon l'une quelconque des revendications précédentes, exempte d'autre principe actif parasiticide.

7. - Procédé pour contrôler le développement de parasites sur les animaux élevés en bâtiments, selon lequel l'environnement de l'animal dans le bâtiment est mis en contact avec une suspension aqueuse conforme à l'une quelconque des revendications 1 à 6.

8. - Procédé selon la revendication précédente dans lequel les parasites sont des acariens.

9. - Procédé selon l'une quelconque des revendications 7 et 8 dans lequel les animaux sont des poules pondeuses.

10. - Utilisation d'une suspension aqueuse comprenant de 1 à 15% en poids de silice et de 30 à 45% de bicarbonate de sodium pour ses effets parasiticides et antifongiques combinés.
